# EUROPÄISCHE PATENTSCHRIFT

(11) **EP 1 528 421 B1**
(45) Veröffentlichungstag und Bekanntmachung des Hinweises auf die Patenterteilung: **23.05.2007**
(21) Anmeldenummer: 04103308.5
(22) Anmeldetag: 13.07.2004
(51) Int. Cl.: G02B 21/06

(54) **Stereomikroskop mit einer Leuchtdioden-Beleuchtung**
Stereomicroscope with a light-emitting diode Illumination System
Stéréomicroscope avec un system d'éclairage à diodes électroluminescentes

(30) Priorität: 28.08.2003 DE 10339618
(43) Veröffentlichungstag der Anmeldung: 04.05.2005
(73) Patentinhaber: Leica Microsystems (Schweiz) AG, 9435 Heerbrugg (CH)
(72) Erfinder: Sander, Ulrich, Dr., 9445, Rebstein (CH)
(74) Vertreter: Rosenich, Paul

(56) Entgegenhaltungen:
- WO-A-01/62012
- WO-A-01/69302
- WO-A-98/13716
- DE-A- 10 021 063
- DE-A1- 3 418 839
- US-A- 4 786 155
- US-A- 5 471 052
- US-A1- 2003 007 365
- US-A1- 2003 042 493
- US-B1- 6 249 381
- PATENT ABSTRACTS OF JAPAN Bd. 1998, Nr. 03, 27. Februar 1998 (1998-02-27) -& JP 09 298312 A (HITACHI CABLE LTD), 18. November 1997 (1997-11-18)
- PATENT ABSTRACTS OF JAPAN Bd. 1997, Nr. 09, 30. September 1997 (1997-09-30) -& JP 09 127424 A (YOKOGAWA ELECTRIC CORP), 16. Mai 1997 (1997-05-16)
- PATENT ABSTRACTS OF JAPAN Bd. 2000, Nr. 08, 6. Oktober 2000 (2000-10-06) -& JP 2000 133029 A (TB OPTICAL KK), 12. Mai 2000 (2000-05-12)
- PATENT ABSTRACTS OF JAPAN Bd. 2003, Nr. 05, 12. Mai 2003 (2003-05-12) & JP 2003 029158 A (OLYMPUS OPTICAL CO LTD), 29. Januar 2003 (2003-01-29)

## Beschreibung

Die Erfindung betrifft ein Stereomikroskop oder ein Stereooperationsmikroskop mit einer Beleuchtungsvorrichtung.

Farblicht emittierende Leuchtdioden (engl.: LED = Light Emitting Diode) sind inzwischen so leuchtstark, dass sie z.B. für Verkehrssignalanlagen und in Rücklichtern von Fahrzeugen eingesetzt werden.

Für eine Mikroskopbeleuchtung ist vor allem weißes Licht erwünscht. Es gibt bereits weißes Licht emittierende Leuchtdioden. Diese sind jedoch für diese Anwendung nicht hell genug.

Eine Mehrzahl von nebeneinander angeordneten Leuchtdioden, die rotes, grünes und blaues Licht emittieren, können verwendet werden, um weißes Licht zu erzeugen.

In DE 3734691 C2 wird eine Lösung vorgestellt, mit Hilfe einer solchen Rot-Grün-Blau-Anordnung von vielen kleinen LEDs verschiedene Beleuchtungsarten und eine Intensitätsregelung zu ermöglichen. Durch selektives örtliches Ansteuern der einzelnen LEDs kann eine Hellfeld-, eine Dunkelfeld- oder eine Schräglichtbeleuchtung erzeugt werden. Die Intensität der gesamten Beleuchtung kann hierbei dadurch geregelt werden, dass entweder alle oder weniger LEDs in Betrieb sind, oder wiederum nur diejenigen LEDs, die eine bestimmte Konfiguration ergeben. Die einzelnen LEDs sind jedoch nicht für sich gesehen steuerbar, sie sind nur ein- und ausschaltbar.

Um eine gleichmäßig homogene Ausleuchtung der Beleuchtungsapertur zu erreichen, muss im unmittelbaren Bereich der LED-Lichtquelle eine Mattscheibe eingebracht werden.

Eine weitere Ausführung gemäß diesem Stand der Technik sieht vor, dass mit einer roten, grünen und blauen LED-Flächenlichtquelle und einem System von dichroitischen Teilern weißes Licht erzeugt werden kann. Diese Beleuchtungsvorrichtung bietet eine hohe Lichtintensität, ist jedoch relativ voluminös. Aufgrund der großen optischen Wege muss das Licht durch zusätzliche Linsen gebündelt werden.

Ein weiterer Nachteil ist die hohe Justiergenauigkeit der dichroitischen Spiegel, um eine gute und konstante Farbgenauigkeit zu gewährleisten.

Die Nachteile von Wolfram-Lampen, Halogenlampen usw., wie sie bisher für Mikroskope verwendet werden, sind vor allem hohe Wärmeverlustleistung, hoher Leistungsbedarf, geringe Lebensdauer, geringe Robustheit, hoher Raumbedarf, sowie hohes Gewicht (vergl. DE 3734691 C2, Spalte 1, Zeilen 7-12).

In der Offenlegungsschrift DE 1913711 wird eine Lösung für eine gleichmäßige Lichtverteilung und Intensitätsregelung einer einzigen herkömmlichen Lichtquelle (Planckscher Strahler) mittels Faserbündel vorgestellt. Hierzu wird der herkömmlichen Lichtquelle mit Blende ein Faserbündel mit einer einzigen Eintritts- und Austrittsfläche nachgeschaltet. Bezüglich der Ein- und Austrittsfläche besteht keine örtliche Zuordnung der Fasern.

Dieses bietet den Vorteil, dass die inhomogene Intensitätsverteilung des Lichtquellen-Bildes am Faserende homogenisiert und mit Hilfe der Blende am Fasereingang eine kontinuierliche Intensitätsregelung am Faserende erzeugt wird.

Der vorliegenden Erfindung liegt nicht in erster Linie das Bedürfnis nach einer gleichmäßigen Intensitätsverteilung zugrunde, sondern die Zusammenführung und damit verbundene Intensitätssteigerung des Lichtes aus verschiedenen Lichtquellen, ohne erhöhten Platzbedarf und ohne die erwähnten Nachteile herkömmlicher Lichtquellen.

Derzeitiger Stand der Technik ist, dass eine Farblicht emittierende LED eine höhere Leuchtdichte als eine weißes Licht emittierende LED besitzt. Durch die Zusammenführung des Lichtes dreier Farb-LEDs ist der Leuchtdichten-Unterschied zu einer einzelnen weißes Licht emittierenden LED um so größer.

Ein Stereomikroskop nach dem Oberbegriff von Anspruch 1 ist in JP 2003 029158 A offenbart. Lichtquellen mit mehreren farbigen LEDs und mindestens einem Lichtleiter sind in JP 09 127424 A, JP 2000 133029 A, WO 01/62012 A, DE 34 18 839 A und US 2003/0042493 A offenbart. DE 100 21 063 A offenbart ein Stereomikroskop mit einem eingespiegelten Display.

Die Erfindung betrifft ein Stereomikroskop nach Anspruch 1.

So wird erfindungsgemäß wenigstens je eine rotes, eine grünes und eine blaues Licht emittierende Leuchtdiode räumlich nebeneinander angeordnet. Das austretende Licht wird jeweils in ein mehrarmiges Lichtleiter-Faserbündel eingespeist, wobei jeder Lichtleiterarm von einer Farblicht emittierenden Leuchtdiode beleuchtet wird. Die Lichtleiterarme werden zu einem gemeinsamen Lichtleiter zusammengeführt und die einzelnen Lichtfasern bestmöglich vermischt. Es ergibt sich daraus eine Lichtweiche. Zur effektiven Lichtausnutzung ist es bevorzugt, anstelle von normalen Lichtleitern solche mit heißverschmolzenen Enden zu benutzen.

Mit Hilfe dieser faseroptischen Bauteile sind die Leuchtdioden nun fernab vom Mikroskop angeordnet. Das bringt den Vorteil, dass der Mikroskopkörper klein und leicht ausgeführt werden kann. Ein weiterer Vorteil ist das Entfallen der Notwendigkeit, im unmittelbaren Bereich der Optik eine Mattscheibe als Diffusor vorzuschalten, weil die streuende Wirkung der Mattscheibe durch die Lichtleiterfasern übernommen wird.

Das Farblicht tritt auf der mikroskopnahen Seite gemischt aus und ist in Summe als weißes Licht verwendbar und zudem sehr viel heller als derzeitig verfügbares LED-Licht aus weißes Licht emittierenden Leuchtdioden.

Das weiße Mischlicht muss jedoch nicht zwingend aus rotem, grünem und blauem LED-Licht zusammengesetzt sein, dieses kann auch mit Hilfe von gelben und blauen LED-Licht geschehen.

Es ist ein heute übliches Verfahren, weißes Licht aus rotem, blauem und grünem zu mischen, die Erfindung soll jedoch ausdrücklich nicht auf dieses Verfahren eingeschränkt sein. So ist es z.B. auch möglich, weißes Licht aus blauem und gelbem zusammenzusetzen. (Siehe Siemens Magazin, Forschung & Innovation/Leuchtdioden, New World 4/2000, Seite 39.)

Die Lichtweiche kann auch aus einem Lichtleitstabsystem bestehen. Bei entsprechender Kürze der Lichtleitstäbe bringt dieses den Vorteil einer kompakten Bauweise.

Die Anpassung der numerischen Apertur kann über einen Querschnittswandler mit unterschiedlichen Eintritts- und Austrittsflächen erzeugt werden.

Weiterhin kann das Spektrum des Beleuchtungslichts durch elektrische Helligkeitsregelung der einzelnen Leuchtdioden frei gewählt werden, es sind keine Filter notwendig. Z.B. könnte für die Erzeugung eines regredienten Lichts (Red Reflex) in der Ophthalmologie zeitweise nur die rotes Licht emittierende Leuchtdiode verwendet werden, oder nur die grünes Licht emittierende Leuchtdiode zur Rotfrei-Beobachtung. Blue Light Hazard kann durch Reduktion der Emission der blaues Licht emittierenden Leuchtdiode reduziert werden.

Des Weiteren können durch eine derartige Falschfarben-Beleuchtung gewebespezifische Veränderungen selektiv dargestellt werden. Auch bessere Kontrastierungen können dadurch erreicht werden. Dieses geschieht zu Diagnosezwecken, aber auch um eine möglichst gewebeschonende Beleuchtung zu gewährleisten.

Weiterhin besteht mit dieser spektral selektiven Beleuchtung die Möglichkeit, nur das Licht anzubieten, das zum notwendigen Bildaufbau des Mikroskops beiträgt, bzw. der spektralen Empfindlichkeit des Beobachterauges entspricht.

Sind die Leuchtdioden elektrisch nicht farbänderungsfrei regelbar, könnten ihnen wahlweise regelbare Filter nachgeschaltet sein, die den jeweiligen Farbanteil nach Bedarf dämpfen.

Gemäß einer Weiterentwicklung kann auch ein weiteres Faserbündel zu Rückkopplungszwecken vorgesehen sein. Dieses Faserbündel nimmt am distalen (an dem der Lichtquelle entgegengesetzten Ende befindlichen) Faserbündelende das vom Objekt reflektierte Licht auf und leitet es auf einen Sensor, der die Lichtfarbe und die Helligkeit detektiert. Somit können diese Informationen der Auswertung zur Verfügung gestellt oder zu Regelungszwecken eingesetzt werden. Zum Beispiel können durch einen Rechner beliebige Spektren vorgewählt werden. Diese werden dann mit den gemessenen verglichen. Abweichungen davon werden durch diskrete Ansteuerung und Regelung der jeweiligen Farb-LEDs ausgeglichen. Damit ist man in der Lage, beliebige Beleuchtungsspektren, abweichend vom Planckschen Strahlungsspektrum, zu erzeugen.

Gemäß einer weiteren Ausgestaltung der erfindungsgemäßen Beleuchtungsvorrichtung ist es vorgesehen, Falschfarbenbilder mit Hilfe einer Kamera aufzunehmen und in dem Rechner abzuspeichern. Diese können zu einem späteren Zeitpunkt nach Belieben zu dem gerade aktiven Bild mit Hilfe eines Displays sowohl in einen oder in beide Stereomikroskop-Strahlen-gänge eingespiegelt bzw. überlagert werden.

Weitere Ausbildungen der Erfindung sind in den Figuren und in den abhängigen Patentansprüchen angegeben.

Die Bezugszeichenliste ist Bestandteil der Offenbarung.

Anhand der Figuren wird die Erfindung symbolisch und beispielhaft näher erläutert.

Gleiche Bezugszeichen bedeuten gleiche Bauteile, Bezugszeichen mit unterschiedlichen Indices geben funktionsgleiche oder ähnliche Bauteile an.

Es zeigen dabei
- Fig. 1 -: eine Anordnung von drei LED-Flächenlichtquellen, die rotes, grünes und blaues Licht mit Hilfe von dichroitischen Spiegeln zu weißem Mischlicht gemäß Stand der Technik vereint;
- Fig. 2 -: in schematischer Ansicht eine erfindungsgemäße Beleuchtungs-vorrichtung für ein optisches Beobachtungsgerät, z.B. ein Mikroskop, mit drei LEDs, die rotes, grünes und blaues LED-Licht mit Hilfe eines Lichtleiters mit Weiche zu weißem Mischlicht vermengt;
- Fig. 3 -: eine Anordnung gemäß Fig. 2, die mit einer gelbes Licht und einer blaues Licht emittierenden LED und einem entsprechenden Lichtleiter mit Weiche auskommt;
- Fig. 4 -: die Anordnung aus Fig. 2, mit einem zusätzlichen Lichtleiterarm, einem Messsensor und einer Signalverarbeitungseinheit und
- Fig. 5 -: die schematische Anordnung einer komplexen, erfindungsgemäßen LED-Beleuchtungsvorrichtung mit einem Rechner und Einspiegelungsmöglichkeit in die Beobachtungsstrahlengänge des optischen Beobachtungsgeräts mittels eines Displays.

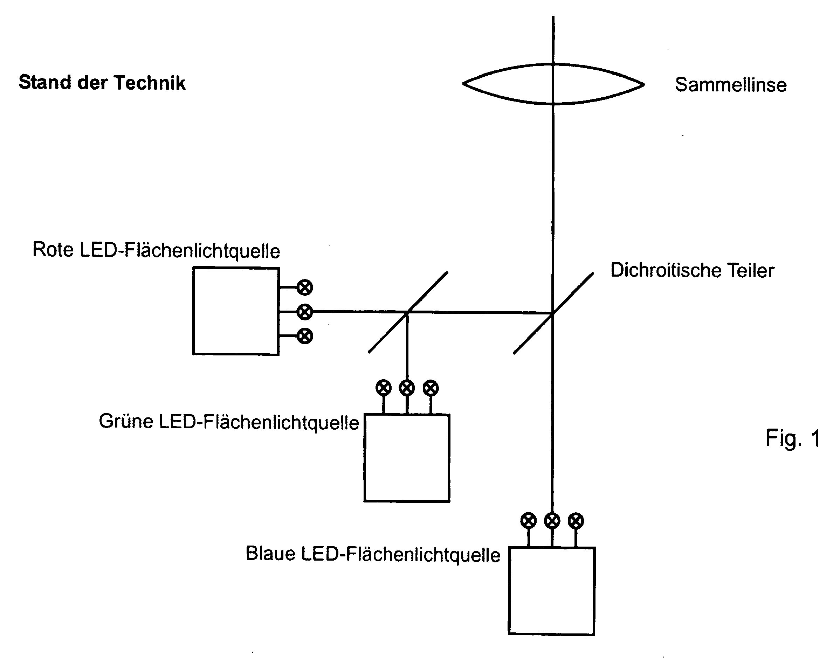

Fig. 1 zeigt eine Beleuchtungsvorrichtung gemäß Stand der Technik. Hierbei wird das Licht einer roten, grünen und blauen LED-Flächenlichtquelle mit Hilfe von dichroitischen Teilern zu weißem Licht vermischt.

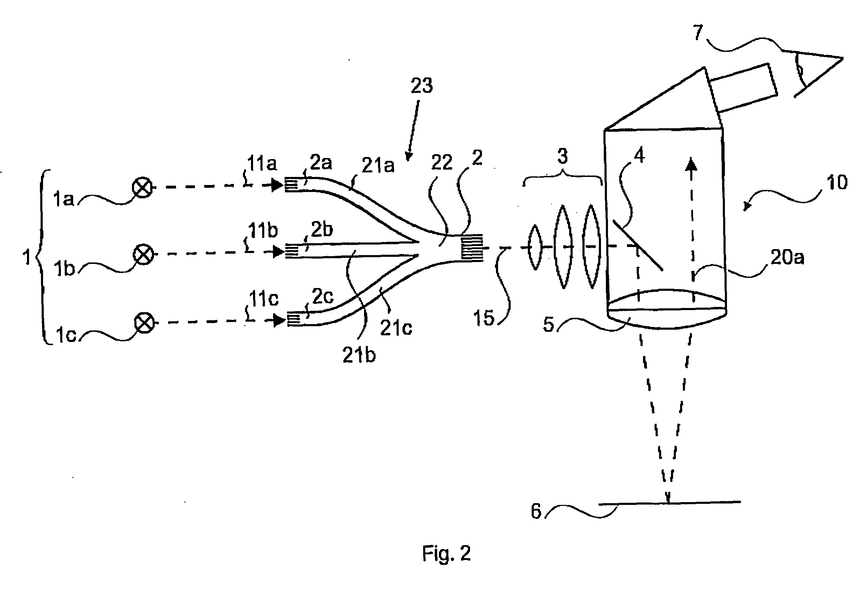

Die in Fig. 2 dargestellte Beleuchtungsvorrichtung umfasst wenigstens je eine rotes Licht emittierende Leuchtdiode 1a, eine grünes Licht emittierende Leuchtdiode 1b und eine blaues Licht emittierende Leuchtdiode 1c die jeweils rotes 11a, grünes 11b und blaues Licht 11c emittieren. Diese Rot-Grün-Blau-Anordnung bildet die LED-Anordnung 1. Jeder der Leuchtdioden 1a, 1b, 1c ist je ein Eingang von insgesamt drei Lichtleiterarmen 21a, 21b, 21c zugeordnet. Die drei Lichtleiterarme 21a, 21b, 21c vereinigen sich und bilden somit einen Lichtleiter mit Weiche 23, der einen einzigen Ausgang 2 aufweist. Hier dringt weißes Mischlicht 15 durch eine Beleuchtungsoptik 3 auf einen Spiegel 4, von dem es durch ein Hauptobjektiv 5 eines Stereomikroskops 10 gelenkt wird. Der Betrachter 7 sieht dann durch den Beobachtungsstrahlengang 20a das beleuchtete Objekt 6.

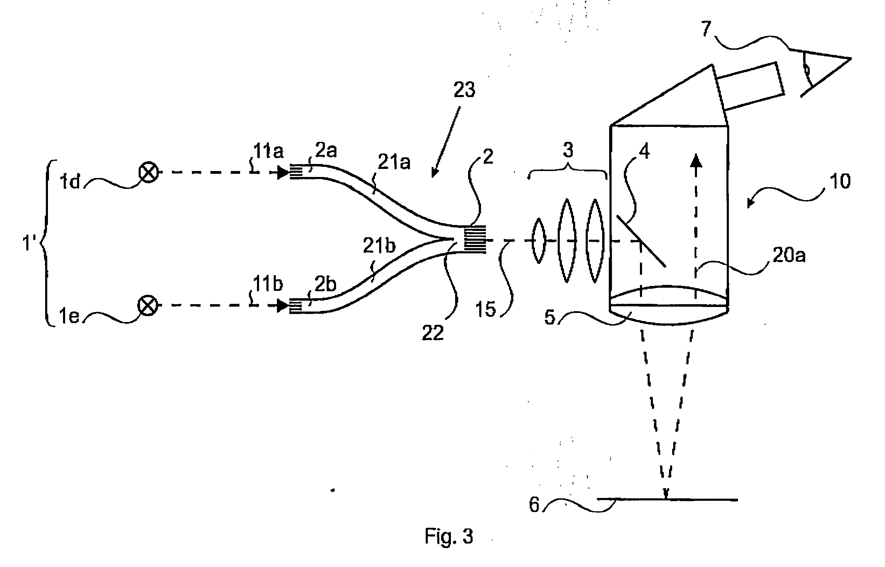

Fig. 3 zeigt prinzipiell die gleiche Anordnung wie in Fig. 2, allerdings wird hier das weiße Beleuchtungslicht 15 aus zwei Leuchtdioden 1d (z.B. blaues Licht emittierend) und 1e (z.B. gelbes Licht emittierend) zusammengesetzt. Hierfür ist kein dreiarmiger Lichtleiter mit Weiche 23 mehr nötig, es genügt ein zweiarmiger.

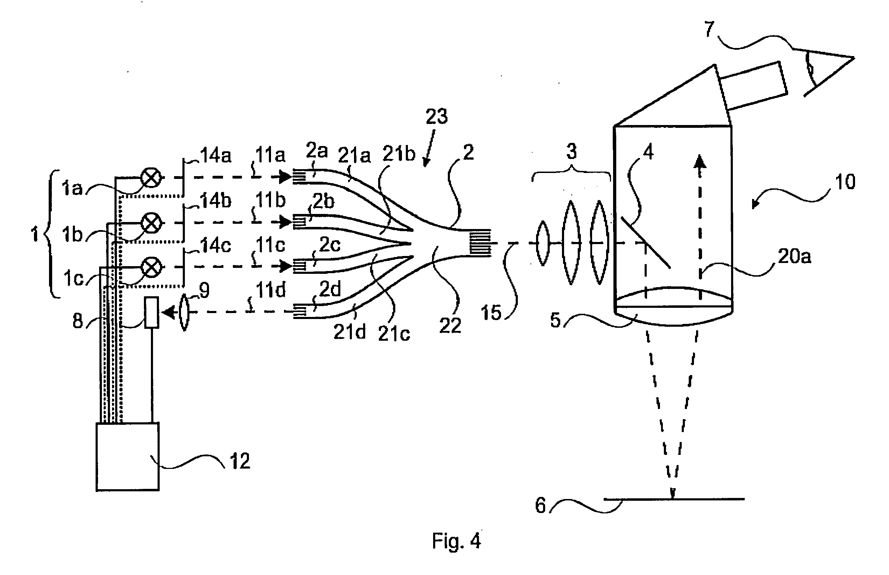

In Fig. 4 ist dargestellt, dass ein zusätzlicher Lichtleiterarm 2d vom Objekt 6 reflektiertes und durch ihn transportiertes Objekt-Licht 11d über eine Optik 9 einem Messsensor 8 zuführt. Der Messsensor 8 seinerseits gibt seine Messdaten an eine Signalverarbeitungseinheit 12 weiter. Letztere steuert in einem frei vorwählbaren oder automatischen Regelungsprozess bezüglich eines gewünschten Spektrums die Leuchtdioden 1a, 1b, 1c oder/und auch korrespondierende Filter 14a, 14b, 14c.

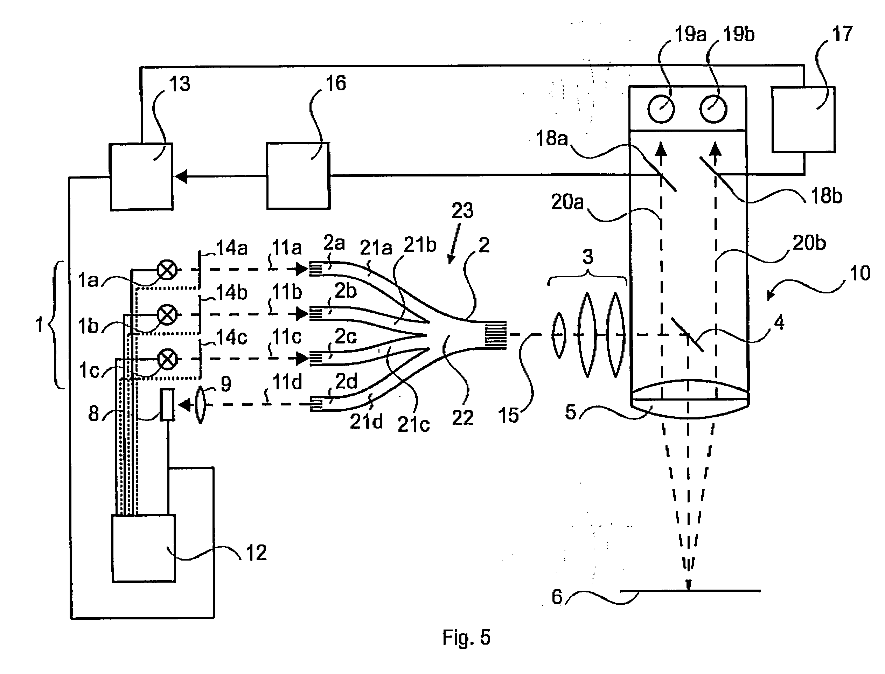

Fig. 5 zeigt die Anordnung aus Fig. 4, die durch einen Rechner 13 und eine Kamera 16 ergänzt ist. Die Kamera 16 entnimmt aus dem linken Beobachtungsstrahlengang 20a des stereoskopischen optischen Beobachtungsgeräts 10 mit Hilfe eines Umlenkelements 18a ein Bild, das sie dem Rechner 13 zuführt. Der Rechner 13 kann aus seiner Speichereinheit gespeicherte Daten oder Bilder - gegebenenfalls in Falschfarben-Darstellung - abrufen. Diese Daten und/oder Bilder vom Rechner 13 werden über ein Display 17 und ein Umlenkelement 18b in den rechten Beobachtungsstrahlengang 20b, bzw. ins rechte Okular 19b eingespiegelt. Prinzipiell ist eine stereoskopische Einspiegelung auch in beide Beobachtungsstrahlengänge 20a, 20b möglich.

### Bezugszeichenliste

- 1,1' -: LED-Anordnung
- 1a -: Rotes Licht emittierende Leuchtdiode
- 1b -: Grünes Licht emittierende Leuchtdiode
- 1c -: Blaues Licht emittierende Leuchtdiode
- 1d -: Gelbes Licht emittierende Leuchtdiode
- 1e -: Blaues Licht emittierende Leuchtdiode
- 2 -: Gemeinsamer Lichtleiter-Ausgang für weißes Mischlicht
- 2a-c -: Lichtleiterarm-Eingang
- 2d -: Lichtleiter-Ausgang für Objektlicht
- 3 -: Beleuchtungsoptik
- 4 -: Spiegel
- 5 -: Hauptobjektiv
- 6 -: Objekt
- 7 -: Betrachterauge
- 8 -: Messsensor
- 9 -: Optik
- 10 -: Stereomikroskop
- 11a -: Rotes Licht
- 11b -: Grünes Licht
- 11c -: Blaues Licht
- 11d -: Objektlicht
- 12 -: Signalverarbeitungseinheit
- 13 -: Rechner
- 14a-c -: Filter
- 15 -: Weißes Mischlicht
- 16 -: Kamera
- 17 -: Display
- 18a, b -: Umlenkelemente
- 19a -: Linkes Okular
- 19b -: Rechtes Okular
- 20a, b -: Beobachtungsstrahlengang
- 21a-d -: Lichtleiterarm
- 22 -: Gemeinsamer Lichtleiterarm
- 23 -: Lichtleiterweiche

## Patentansprüche

1. Stereomikroskop (10) mit einem Hauptobjektiv (5), mit einer Beleuchtungseinspiegelungsvorrichtung (4) zur Beleuchtung durch das Hauptobjektiv (5) eines Objekts (6), mit einer außerhalb des Mikroskopkörpers angeordneten Beleuchtungsvorrichtung (1) mit mindestens einer ersten (1d) und einer zweiten Lichtquelle (1e) oder mindestens einer ersten (1a), einer zweiten (1b) und einer dritten Lichtquelle (1c) mit je einem Beleuchtungsstrahl (11a, 11b oder 11a, 11b und 11c) und einer Lichtleiterweiche (23) mit je einem Lichtleiterarm (21a-21c) für jede Lichtquelle (1a-1e), wobei jeder Lichtleiterarm (21a-21c) einen Lichtleiter-Eingang (2a, 2b oder 2a, 2b und 2c) für jeden Beleuchtungsstrahl (11a, 11b oder 11a, 11b und 11c) aufweist und einem gemeinsamen Lichtleiter-Arm (22) mit einem gemeinsamen Lichtleiter-Ausgang (2) aus dem ein summierter Beleuchtungsstrahl (5) über eine Optik (3) der Beleuchtungseinspiegelungsvorrichtung (4) zugeordnet ist, wobei die einzelnen Lichtleitfasern der Lichtleiterarme (21a-21c) so angeordnet sind, dass sie am gemeinsamen Lichtleiter-Ausgang (2) durchmischt sind,
**dadurch gekennzeichnet, dass**
im Falle von mindestens zwei Lichtquellen die erste Lichtquelle (1d) eine gelbes Licht emittierende Leuchtdiode und die zweite Lichtquelle (1e) eine blaues Licht emittierende Leuchtdiode ist und
im Falle von mindestens drei Lichtquellen die erste Lichtquelle (1a) eine rotes Licht emittierende Leuchtdiode, die zweite Lichtquelle (1b) eine grünes Licht emittierende Leuchtdiode und die dritte Lichtquelle (1c) eine blaues Licht emittierende Leuchtdiode ist
**und dass**
dem Stereomikroskop (10) ein Rechner (13) zugeordnet ist, aus dem gespeicherte Daten, Bilder, und Falschfarbenbilder abrufbar sind und in mindestens einen Beobachtungsstrahlengang (20b) des Stereomikroskops (10) einspiegelbar sind.

2. Stereomikroskop (10) nach Anspruch 1, **dadurch gekennzeichnet, dass** der gemeinsame Lichtleiter-Ausgang (2) zur Aufnahme von vom Objekt (6) reflektierten Lichts und Weiterleitung durch einen vierten Lichtleiter-Arm (21d) auf einen Messsensor (8) ausgestaltet ist.

3. Stereomikroskop (10) nach Anspruch 2, **dadurch gekennzeichnet, dass** die Intensität und spektrale Zusammensetzung des Lichtes der einzelnen Leuchtdioden (1a-1c bzw. 1d, 1e) durch eine Signalverarbeitungseinheit (12) steuerbar ist, die ihr Eingangssignal von dem Messsensor (8) erhält.

4. Stereomikroskop (10) nach einem der vorhergehenden Ansprüche, **dadurch gekennzeichnet, dass** eine mit dem Rechner (13) gekoppelte Kamera (16) zugeordnet ist.

5. Stereomikroskop (10) nach Anspruch 4, **dadurch gekennzeichnet, dass** ein mit der Kamera (16) und/oder dem Rechner (13) gekoppeltes Display angeordnet ist.

6. Stereomikroskop (10) nach einem der vorhergehenden Ansprüche, **dadurch gekennzeichnet, dass** die Lichtleiterweiche (23) flexibel ist.

7. Stereomikroskop (10) nach einem der vorhergehenden Ansprüche, **dadurch gekennzeichnet, dass** die Lichtleiterwelche (23) eingangs- und ausgangsseitig heiß verschmolzene Enden (2, 2a-2d) aufweist.

8. Stereomikroskop (10) nach einem der vorhergehenden Ansprüche, **dadurch gekennzeichnet, dass** zwischen jeder Leuchtdiode (1a-1c bzw. 1d, 1e) und dem ihr zugeordneten Lichtleiterarm (2a-2c) je ein - vorzugsweise regelbarer - Filter (14a-14c) angeordnet ist.

9. Stereomikroskop (10) nach einem der vorhergehenden Ansprüche, **dadurch gekennzeichnet, dass** die Lichtleiterweiche (23) aus Lichtleitstäben besteht.

10. Stereomikroskop (10) nach einem der vorhergehenden Ansprüche, **dadurch gekennzeichnet, dass** die Lichtleiterweiche (23) zur Anpassung der numerischen Apertur als Querschnittswandler ausgelegt ist.

## Claims

1. Stereomicroscope (10) having a main objective (5), having an illumination input-reflection device (4) for illuminating an object (6) through the main objective (5), having an illumination device (1), arranged outside the microscope body, with at least a first light source (1d) and a second light source (1e) or at least a first light source (1a), a second light source (1b) and a third light source (1c) with an illumination beam (11a, 11b or 11a, 11b and 11c) in each case and a light guide switch (23) with a light guide arm (21a-21c) in each case for each light source (1a-1e), each light guide arm (21a-21c) having a light guide input (2a, 2b or 2a, 2b and 2c) for each illumination beam (11a, 11b or 11a, 11b and 11c), and having a common light guide arm (22) with a common light guide output (2) from which a summed illumination beam (5) is assigned via an optical system (3) to the illumination input-reflection device (4), the individual light guide fibres of the light guide arms (21a-21c) being arranged such that they are thoroughly mixed at the common light guide output (2),
**characterized in that**
in the case of at least two light sources the first light source (1d) is a light-emitting diode emitting a yellow light, and the second light source (1e) is a light-emitting diode emitting a blue light, and
in the case of at least three light sources the first light source (1a) is a light-emitting diode emitting a red light, the second light source (1b) is a light-emitting diode emitting a green light, and the third light source (1c) is a light-emitting diode emitting a blue light,
and **in that**
the stereomicroscope (10) is assigned a computer (13) from which stored data, images and false colour images can be called up and can be reflected into at, least one observation beam path (20b) of the stereomicroscope (10).

2. Stereomicroscope (10) according to Claim 1, **characterized in that** the common light guide output (2) is configured for receiving light reflected by the object (6) and passing it on to a measuring sensor (8) through a fourth light guide arm (21d).

3. stereomicroscope (10) according to Claim 2, **characterized in that** the intensity and spectral composition of the light of the individual light-emitting diodes (1a-1c and 1d, 1e) can be controlled by a signal processing unit (12) which receives its input signal from the measuring sensor (8).

4. Stereomicroscope (10) according to one of the preceding claims, **characterized in that** a camera (16) coupled to the computer (13) is arranged.

5. Stereomicroscope (10) according to Claim 4, **characterized in that** a display coupled to the camera (16) and/or to the computer (13) is arranged.

6. Stereomicroscope (10) according to one of the preceding claims, **characterized in that** the light guide switch (23) is flexible.

7. Stereomicroscope (10) according to one of the preceding claims, **characterized in that** the light guide switch (23) has hot-fused ends (2, 2a-2d) on the input and output sides.

8. Stereomicroscope (10) according to one of the preceding claims, **characterized in that** a - preferably controllable - filter (14a-14c) is arranged in each case between each light-emitting diode (1a-1c and 1d, 1e) and the light guide arm (2a-2c) assigned to it.

9. Stereomicroscope (10) according to one of the preceding claims, **characterized in that** the light guide switch (23) consists of light-guiding rods.

10. Stereomicroscope (10) according to one of the preceding claims, **characterized in that** the light guide switch (23) is designed as a cross section converter for adapting the numerical aperture.

## Revendications

1. Stéréomicroscope (10), avec un objectif principal (5), avec un dispositif de projection d'éclairage (4) pour éclairer un objet (6) à travers l'objectif principal (5), avec un dispositif d'éclairage (1) disposé à l'extérieur du corps de microscope avec au moins une première (1d) et une deuxième sources de lumière (1e) ou avec au moins une première (1a), une deuxième (1b) et une troisième sources de lumière (1c) avec respectivement un faisceau d'éclairage (11a, 11b ou 11a, 11b et 11c) et un séparateur de conducteur de lumière (23) avec respectivement une branche de conducteur de lumière (21a à 21c) pour chaque source de lumière (1a à 1e), dans lequel chaque branche de conducteur de lumière (21a à 21c) présente une entrée de conducteur de lumière (2a, 2b ou 2a, 2b et 2c) pour chaque faisceau d'éclairage (11a, 11b ou 11a, 11b et 11c), et une branche de conducteur de lumière commune (22) avec une sortie de conducteur de lumière commune (2) à partir de laquelle un faisceau d'éclairage additionné (5) est attribué par l'intermédiaire d'un système optique (3) au dispositif de projection d'éclairage (4), dans lequel les fibres optiques individuelles des branches de conducteur de lumière (21a à 21c) sont disposées de telle sorte qu'elles sont mélangées à la sortie de conducteur de lumière commune (2),
**caractérisé en ce que**
dans le cas d'au moins deux sources de lumière, la première source de lumière (1d) est une diode électroluminescente émettant de la lumière jaune et la deuxième source de lumière (1e) est une diode électroluminescente émettant de la lumière bleue, et
dans le cas d'au moins trois sources de lumière, la première source de lumière (1a) est une diode électroluminescente émettant de la lumière rouge, la deuxième source de lumière (1b) est une diode électroluminescente émettant de la lumière verte, et la troisième source de lumière (1c) est une diode électroluminescente émettant de la lumière bleue,
et **en ce que** le stéréomicroscope (10) se voit attribuer un ordinateur (13) à partir duquel des données, des images et des images en couleurs fausses mémorisées peuvent être interrogées et projetées dans au moins une trajectoire du faisceau d'observation (20b) du stéréomicroscope (10).

2. Stéréomicroscope (10) selon la revendication 1, **caractérisé en ce que** la sortie de conducteur de lumière commune (2) est configurée pour recevoir la lumière réfléchie par l'objet (6) et la retransmettre à travers une quatrième branche de conducteur de lumière (21d) sur un capteur de mesure (8).

3. Stéréomicroscope (10) selon la revendication 2, **caractérisé en ce que** l'intensité et la composition spectrale de la lumière des diodes électroluminescentes individuelles (1a à 1c ou 1d, 1e) peuvent être commandées par une unité de traitement de signal (12) qui reçoit son signal d'entrée du capteur de mesure (8).

4. Stéréomicroscope (10) selon l'une quelconque des revendications précédentes, **caractérisé en ce qu'**une caméra (16) couplée à l'ordinateur (13) est aménagé.

5. Stéréomicroscope (10) selon la revendication 4, **caractérisé en ce qu'**un affichage couplé à la caméra (16) et/ou à l'ordinateur (13) est aménagé.

6. Stéréomicroscope (10) selon l'une quelconque des revendications précédentes, **caractérisé en ce que** le séparateur de conducteur de lumière (23) est flexible.

7. Stéréomicroscope (10) selon l'une quelconque des revendications précédentes, **caractérisé en ce que** le séparateur de conducteur de lumière (23) présente du côté de l'entrée et de la sortie des extrémités thermofusionnées (2, 2a à 2d).

8. Stéréomicroscope (10) selon l'une quelconque des revendications précédentes, **caractérisé en ce qu'**entre chaque diode électroluminescente (1a à 1c ou 1d, 1e) et la branche de conducteur de lumière (2a à 2c) qui lui est associée, est aménagé respectivement un filtre (14a à 14c) - de préférence réglable.

9. Stéréomicroscope (10) selon l'une quelconque des revendications précédentes, **caractérisé en ce que** le séparateur de conducteur de lumière (23) se compose de barres de conducteur de lumière.

10. Stéréomicroscope (10) selon l'une quelconque des revendications précédentes, **caractérisé en ce que** le séparateur de conducteur de lumière (23) est conçu comme un transformateur de section pour adapter l'ouverture numérique.
